Europäisches Patentamt

European Patent Office

Office européen des brevets

(19)

(11) **EP 0 700 828 A1**

(12) **EUROPEAN PATENT APPLICATION**
published in accordance with Art. 158(3) EPC

(43) Date of publication:
 **13.03.1996 Bulletin 1996/11**

(21) Application number: **94920593.4**

(22) Date of filing: **05.04.1994**

(51) Int. Cl.$^6$: **B64C 11/38**

(86) International application number: **PCT/RU94/00072**

(87) International publication number:
 **WO 95/26904 (12.10.1995 Gazette 1995/43)**

(84) Designated Contracting States:
 **AT CH DE ES GB LI NL PT SE**

(71) Applicant: **TOVARISCHESTVO S
 OGRANICHENNOI OTVETSTVENNOSTJU
 "ARKHAR"
 Novosibirsk 630041 (RU)**

(72) Inventor: **MAMYKIN, Mikhail Andreevich
 Novosibirsk, 630016 (RU)**

(74) Representative: **W.P. Thompson & Co.
 Coopers Building,
 Church Street
 Liverpool L1 3AB (GB)**

(54) **METHOD OF CONTROLLING THE RESULTANT AERODYNAMIC FORCE PRODUCED BY A PROPELLER AND A DEVICE FOR CARRYING OUT THE SAID METHOD**

(57)    The present method consisting in deflecting the vector of the resultant aerodynamic force from the direction of the propeller axis, is characterized by that while the propeller blades move to a circle azimuth, the various angles of the blades are set on portions from O to $\pi$ radians and from $\pi$ to $2\pi$ radians.

   A device for carrying the method into effect comprises a propeller with one or more blades (4), and a blade angle control mechanism shaped as a cylinder (5) encompassing a propeller shaft (1) and carrying concentric bushings (8 and 9) adapted to interact on the one side with the cylinder (5) through drives (10 and 11), and on the other side, through a roller (12) and a return mechanism (13), with the blade (4). The ends of the bushings (8 and 9) contacting the roller (12) are stepped in shape. The cylinder (5) has its own drive (6) and comprises stops (7).

FIG. 5

## Description

### Technical Field

The invention relates in general to aircraft construction and more specifically to methods and devices for control of the propeller resultant aerodynamic force, and can find application in various airborne vehicles making use of the airscrew-type propelling devices.

### Background Art

One of the most urgent problems of practical aerodynamics of airborne vehicles with the airscrew-type propelling devices resides in improving their flight performance and maneuvering characteristics. One of possible ways towards the solution of said problem lies with improving the airscrew propelling device itself.

Known in the present stage of the art are a variety of methods for improving propeller characteristics by controlling the magnitude and direction of the propeller resultant aerodynamic force.

For instance, a state-of-the-art method and a device for control of the magnitude of the resultant aerodynamic force of tractor- or pusher propellers are known to consist in adjusting the propeller thrust value by varying the collective propeller pitch (cf."Variable pitch propeller". in: Practical aerodynamics of helicopters, by V.F.Romasevich and G.A.Samoilov, Moscow, Voenizdat Publishers, 1980, p.77 (in Russian).

With an increase in the flight speed of an airborne vehicle having a constant-pitch propeller, wherein the propeller blade angle with respect to the propeller plane is constant, the angles of attack of the propeller blades decrease, thereby reducing the propeller thrust. On the other hand, a variable-pitch propeller enables one to increase the blade angles as the flight speed rises, thus providing a constant magnitude of the angles of attack and hence retaining the propeller thrust invariable up to much greater flight speeds. Additionally, whenever necessary a variable-pitch propeller provides for the thrust reversal, that is, changing the direction of the thrust force for an opposite one. Thus, by making use of a variable-pitch propeller, one can control of the magnitude and direction of the thrust value lengthwise the axis of propeller rotation.

However, the method discussed hereinbefore fails to deflect the vector of the resultant aerodynamic force away from the direction of the propeller axis so as to enhance the flight performance and maneuvering characteristics of airborne vehicles.

Another method is heretofore known for control of the propeller resultant aerodynamic force with the aid of a wobble plate (cf. Practical aerodynamics of helicopters, by V.F.Romasevich and G.A.Samoilov, Moscow, Voenizdat Publishers, 1980, p.85 (in Russian).

Propeller blades mounted in the hub rotatably about its own axis, are adapted to interact, through a train of levers, with the inner race of a bearing that encompasses the propeller shaft with a positive clearance, whereas the outer bearing race is associated, through another train of levers, with the vehicle controls. The bearing mentioned above is capable of performing angular displacements round two mutually square axes both longitudinally and transversely.

Such a construction arrangement makes it possible to vary the collective pitch of the propeller blades, thus adjusting the thrust value in the same way as in the case of a variable-pitch propeller and, additionally, to vary the cyclic pitch of the propeller blades by fixing them at various setting angles as to azimuth of the circle described by the propeller blades, thereby deflecting the direction of the vector of the resultant aerodynamic force away from the direction of the propeller axis. This in turn enables one to add to the vehicle maneuverability. The device discussed before is in widespread use in present-day helicopters.

However, the vector of the resultant aerodynamic force is deflectable away from the direction of the propeller axis of rotation but through a rather small angle (up to 20°), which is due to a stepless variation of the blade azimuthal setting, as well as due to structural limitations.

Thus, the present-day methods and devices for control of the propeller resultant aerodynamic force fail to deflect the vector of the resultant aerodynamic force away from the direction of the propeller axis to an angle exceeding 20°.

### Disclosure of the Invention

The present invention has for its principal object to provide a method for control of the resultant aerodynamic force which makes it possible to deflect the vector of action of said force through an angle of up to 90° away from the direction of the propeller axis, as well as to develop a device for carrying said method into effect which features a simple construction arrangement and is reliable in operation.

Said object is accomplished due to the provision of a method for control of the propeller resultant aerodynamic force, consisting in deflecting the vector of the resultant aerodynamic force away from the direction of the propeller axis, wherein, according to the invention, the various angles of the propeller blades are set on portions from O to $\pi$ radians and from $\pi$ to $2\pi$ radians in the course of motion of the propeller blades to a circle azimuth.

Said object is accomplished also due to the fact that in a device, comprising a propeller with one or more blades, and a blade setting control mechanism shaped as a cylinder encompassing the propeller shaft nearby the hub and carrying concentric bushings axially displaceable thereon and adapted to interact on the one side with said cylinder through drives, and on the other side, through a roller and a return mechanism, with the blade, according to the invention, the ends of the concentric bushings contacting the roller are stepped in shape so as to provide blade setting to the aforementioned operating modes, while the cylinder is rotatable about its own axis for control of the zero azimuthal position from its own drive, and comprises stops to prevent the cylinder against axial displacement and retain the operating modes preset by the bushings.

The method and device for control of the resultant aerodynamic force enable one to provide in a best way the aerodynamic modes of operation of the propeller blades, to increase the propeller efficiency, as well as to improve the maneuverability of an airborne vehicle as a whole.

The essence of the present invention is as follows. When moving to an azimuth on a portion from O to $\pi$ radians the propeller blade is so set that the angle of attack would correspond to the maximum or most advantageous modes of operation of the blade profile, that is, the lift coefficient $C_y$ of the blade profile is maximum, or the fineness ratio K is maximum. When moving on a portion from $\pi$ to $2\pi$ radians the blade is so set that its angle of attack would correspond to a minimum lift and a minimum drag of the blade profile, i.e., with $C_y = O$ and the blade profile drag coefficient $C_x$ will be minimum. This results in that there arise unbalanced moments ($M_x$ and $M_y$) in two respective planes, one of said moments being directed to the side opposite to the sense of the propeller rotation and acting in the propeller plane, whereas the other moment will act in a plane square with the propeller plane, thus tending to turn the vehicle towards the portion from $\pi$ to $2\pi$ radians of the circle described by the propeller blade.

When said unbalanced moments are compensated for by one more propeller rotating in synchronism with the main propeller but in the opposite sense and having its axis either parallel to or coaxially with the main propeller axis, or by some other device, e.g., by the vehicle controls, the vehicle will be acted upon by a total force the direction of which will be other than the direction of the propeller axis. The direction of said force is controlled by changing the setting angles of the propeller blades and by the position of the zero of the blade azimuth.

As a result of practical application of the method and device proposed in the present invention, an airborne vehicle acquires, apart from higher thrust, also an additional lifting or lateral force, its maneuverability is improved due to a possibility of direct control over the lateral force. It is found experimentally that the propeller efficiency is increased by about 10-15%.

Brief Description of the Drawings

FIG.1 represents vector diagrams of velocities and forces acting on an individual element of the blade that moves to an azimuth on a portion from O to $\pi$ radians;

FIG.2 represents vector diagrams of velocities and forces acting on an individual element of the blade that moves to an azimuth on a portion from $\pi$ to $2\pi$ radians;

FIG.3 shows, in a simplified manner, how moments of forces arise when the blade moves along a portion from O to $\pi$ radians;

FIG.4 shows, in a simplified manner, how the side force arises;

FIG.5 is an isometric view of a device for carrying into effect the method, according to the invention;

FIG.6 is a simplified plan view of concentric bushings when their mutual arrangement provides for angles of setting of the blades equal for both sections, i.e., from O to $\pi$ radians and from $\pi$ to $2\pi$ radians;

FIG.7 is a simplified plan view of concentric bushings when their mutual arrangement provides for angles of setting of the blades which are greater for a portion from O to $\pi$ radians; and

FIG.8 is a simplified plan view of concentric bushings when their mutual arrangement provides for angles of setting of the blades which are greater for a portion from $\pi$ to $2\pi$ radians.

Best Method of Carrying Out the Invention

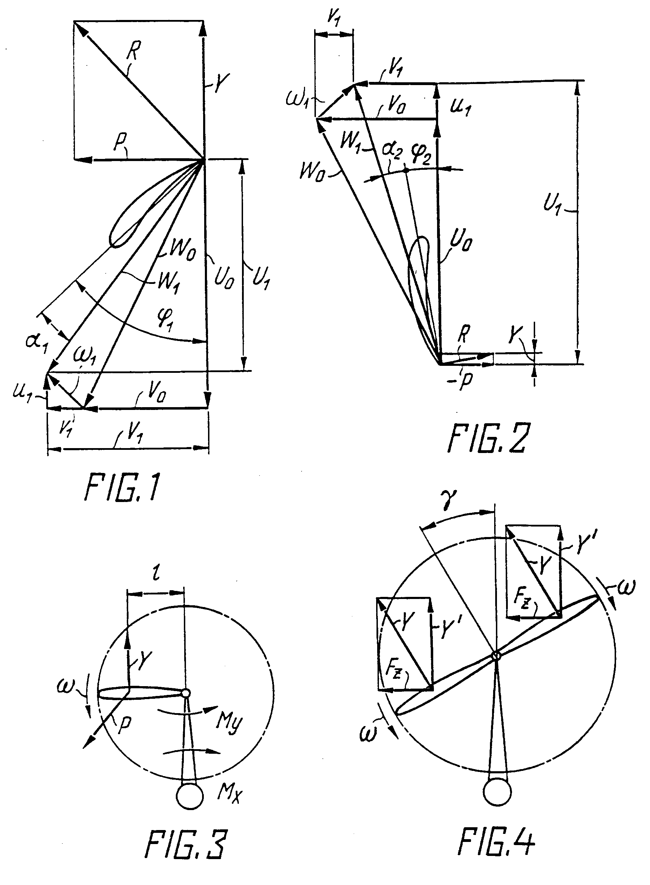

To promote understanding of the present invention given below is detailed description of a method for control of the propeller resultant aerodynamic force to be had with reference to FIGS.1-4.

The position of the propeller axis can be either the aircraft, that is, horizontal, or the helicopter, that is, vertical one.

In the case of a horizontal position of the propeller axis, an azimuthal blade position corresponding to O or $2\pi$ radians is set at the uppermost point of the circle described by the blade. FIGS.1 and 2 represent vector diagrams of velocities and forces for a portion of from O to $\pi$ radians and for that from $\pi$ to $2\pi$ radians at the place of the blade section.

In the diagrams:

| | |
|---|---|
| $U_o$ | is blade peripheral speed at the place of section; |
| $U_1$ | is complete blade peripheral speed; |
| $u_1$ | is induced blade peripheral speed; |
| $V_o$ | is vehicle flight speed; |
| $V_1$ | is axial airstream velocity; |
| $v_1$ | is induced axial airstream velocity; |
| $W_o$ | is total incoming airstream velocity at the place of the blade section; |
| $W_1$ | is incoming airstream true velocity; |
| $\alpha_1$ | is angle of attack of the blade profile at the place of the blade section for a portion from O to $\pi$ radians; |
| $\alpha_2$ | is angle of attack of the blade profile at the place of the blade section for a portion from $\pi$ to $2\pi$ radians; |
| R | is total blade aerodynamic force; |
| P | is thrust; |
| Y | is lift; |

$\phi_1$ is blade angle on a portion from O to $\pi$ radians;

$\phi_2$ is blade angle on a portion from $\pi$ to $2\pi$ radians;

$\omega_1$ is total induced velocity.

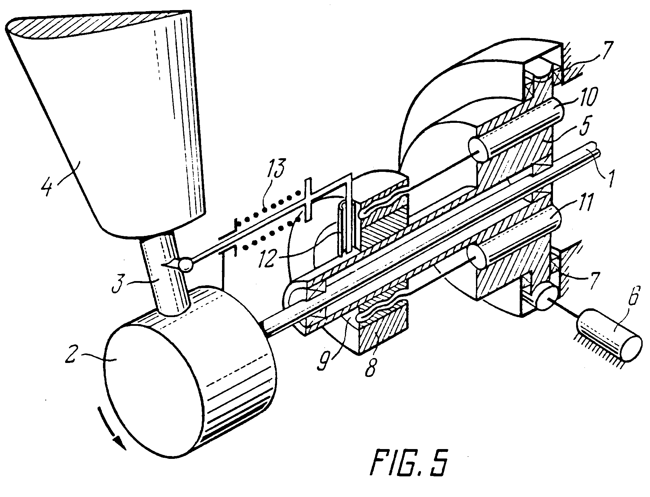

It is clearly evident from the abovementioned diagram that thrust P and lift (lateral force) Y are much greater on a portion from O to $\pi$ radians than on a portion from $\pi$ to $2\pi$ radians, which is responsible for appearing the moments ($M_x$ and $M_y$) indicated in FIG.3, said moments being calculated by the following formulas:

$$M_x = Y * I, M_y = P * I,$$

where I denotes an arm between the propeller axis and the point of force application.

The aforesaid moments are to be compensated for. It is also obvious that the proposed method enables one to positively use lift Y which remains unused with a conventional propeller. The ratio between thrust P and lift Y are adjustable by varying the propeller speed (i.e., the value of $U_o$), as well as angles $\alpha$ of attack and blade angles $\phi$ in such a manner that the vector of the resultant aerodynamic force is deflectable through an angle of up to 90° from the direction of the propeller axis. Lift Y acts on the airborne vehicle with sinusoidal pulses, its mean value being equal to 0.63 the maximum Y value for each propeller blade; hence the greater number of the blades the higher the mean value of lift Y so that it may exceed the maximum value of lift Y for a blade.

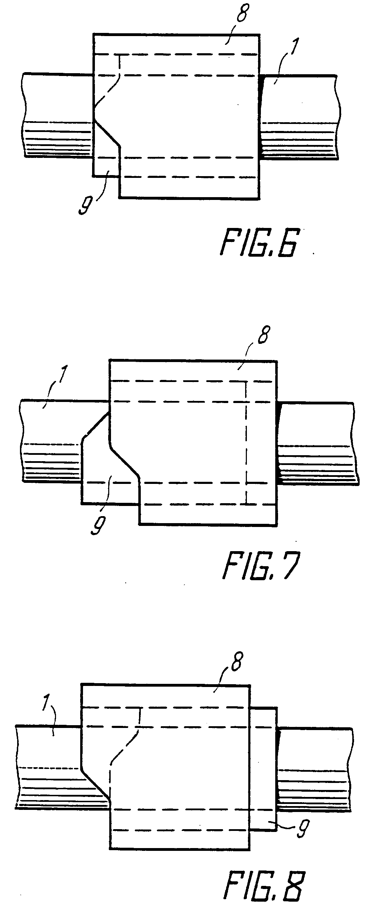

FIG.4 is a graphic representation of the development of lateral force $F_z$ as a result of displacement of the zero azimuthal blade position towards the horizontal plane. With an increase in deflection angle $\gamma$ the magnitude of lift Y remains invariable, and its projections onto the vertical plane (lifting force Y') and onto the horizontal plane (lateral force $F_z$) are decreased and increased, respectively.

In the case of a vertical arrangement of the propeller axis the method of the invention is carried into effect in the same way as described before, with the sole exception that the blade zero azimuthal position is situated ahead.

The device for control of the propeller resultant aerodynamic force (FIG.5) comprises a shaft 1 rigidly coupled to a hub 2 and associated with a blade 4 through a sleeve 3. The number of the blades 4 depends on the adopted configuration of the airborne vehicle. The blade angle $\phi$ is variable. A cylinder 5 is set on the shaft 1 nearby the hub 2 rotatably about its own axis from its own drive 6. The cylinder 5 has stops 7 to prevent it from axial displacement, and carries axially displaceable concentric bushings 8 and 9 which interact, on the one side, with the cylinder 5 through drives 10, 11, and on the other side, said bushings cooperate, through a roller 12 and a return mechanism 13, with the blade 4. The ends of the bushings 8, 9 which are in contact with the roller 12, are stepped in order to provide the blade angles preset by the proposed method. The drive 6 may appear as a worm-and-worm-wheel drive and an electric motor, while the drives 10, 11 may be in fact screw-and-nut drives and electric motors, and the stops 7 may me made as thrust bearings. The return mechanism 13 is shaped as, e.g., a spring which interacts, on the one side, with a rod interconnecting the roller 12 and the blade 4, and on the other side, with the hub 2.

The device described before operates as follows.

The shaft 1 rotates at a constant speed. The roller 12 while riding over the stepped end of the bushings 8, 9 and being pressed against said stepped end by the return mechanism 13, sets angles $\phi$ of the blade 4 for the various portions of its azimuthal position. The magnitudes of angles $\phi_1$ and $\phi_2$ depend on the mutual arrangement of the bushings 8 and 9 and on the position of said bushings with respect to the cylinder 5. The position of the bushing described before is adjustable, in the course of operation of the device, by the drives 10 and 11. When the blade zero azimuthal position is situated at the uppermost point, and the following conditions - $\alpha_1$ corresponds to $C_y$ max; $\alpha_2$ corresponds to $C_y = 0$ - are satisfied, then thrust P and lift Y will be obtained by the device. Whenever it is necessary to develop lateral force $F_z$, the drive 6 is turned on to deflect the blade zero azimuthal position towards the horizontal plane. To adjust the values of P and Y it is necessary to change the speed of the shaft 1 and angles $\phi_1$ and $\phi_2$ of the blades 4.

Industrial Applicability

The herein-proposed method and device for control of the propeller resultant aerodynamic force are applicable in aircraft engineering as devices for establishing thrust and an additional lift, which add higher maneuverability to airborne vehicles. The devices in question can also be used as lifting rotors on aircraft, helicopter, and VTOL vehicles. The device of the invention cam find application also in sporting and combat-support aviation as a device for direct control of the lateral force.

**Claims**

1. A method for control of the propeller resultant aerodynamic force, consisting in deflecting the vector of the resultant aerodynamic force away from the direction of the propeller axis, CHARACTERIZED in that the various angles of the propeller blades are set on portions from O to $\pi$ radians and from $\pi$ to $2\pi$ radians in the course of motion of the propeller blades to a circle azimuth.

2. A device for control of the propeller resultant aerodynamic force, comprising a propeller with one or more blades (4), and a blade angle control mechanism shaped as a cylinder (5) encompassing a propeller shaft (1) nearby a hub (2) and carrying concentric bushings (8 and 9) axially displaceable and adapted to interact on the one side with the cylinder (5) through drives (10 and 11), and on the other side, through a roller (12) and a return mechanism (13), with the blade (4), CHARACTERIZED in that the ends of the bushings (8 and 9) contacting the roller (12) are stepped in shape and the cylinder (5) is rotatable about its own axis from its own drive (6) and comprises stops (7) to prevent it against axial displacement.

FIG.1

FIG.2

FIG.3

FIG.4

FIG. 5

FIG.6

FIG.7

FIG.8

## INTERNATIONAL SEARCH REPORT

| International application No. |
| --- |
| PCT/RU 94/00072 |

**A. CLASSIFICATION OF SUBJECT MATTER**

    IPC6 : B64C 11/38

According to International Patent Classification (IPC) or to both national classification and IPC

**B. FIELDS SEARCHED**

Minimum documentation searched (classification system followed by classification symbols)

    IPC6 : B64C 11/00-11/50, 27/32-27/50

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | V.F. Romasevich et al. "Prakticheskaya aerodinamika vertoletov", 1980 Moscow, voenizdat", pages 30-35,83-88 | 1,2 |
| A | I.S. Dmitriev etal "Sistemi upravlenia odnovintovykh vertoletov, 1969, Moscow, "Mashinostroenie", pages 8-10 | 1,2 |
| A | US,A, 3536415 (E.N. KUSIAK), 27 October 1970 (27.10.70) | 1,2 |
| A | US, A, 4778344 (Abraham Water), 18 October 1988 (18.10.88) | 1,2 |
| A | US, A, 3556674 (R.E. FOOTE), 19 January 1971 (19.01.71) | 1,2 |

☐ Further documents are listed in the continuation of Box C.     ☐ See patent family annex.

| |
| --- |
| * Special categories of cited documents: |
| "A" document defining the general state of the art which is not considered to be of particular relevance |
| "E" earlier document but published on or after the international filing date |
| "L" document which may throw doubts on priority claim(s) or which is cited to establish the publication date of another citation or other special reason (as specified) |
| "O" document referring to an oral disclosure, use, exhibition or other means |
| "P" document published prior to the international filing date but later than the priority date claimed |
| "T" later document published after the international filing date or priority date and not in conflict with the application but cited to understand the principle or theory underlying the invention |
| "X" document of particular relevance; the claimed invention cannot be considered novel or cannot be considered to involve an inventive step when the document is taken alone |
| "Y" document of particular relevance; the claimed invention cannot be considered to involve an inventive step when the document is combined with one or more other such documents, such combination being obvious to a person skilled in the art |
| "&" document member of the same patent family |

| Date of the actual completion of the international search | Date of mailing of the international search report |
| --- | --- |
| 25 October 1994 (25.10.94) | 9 December 1994 (09.12.94) |

| Name and mailing address of the ISA/ | Authorized officer |
| --- | --- |
| ISA/RU | |
| Facsimile No. | Telephone No. |

Form PCT/ISA/210 (second sheet) (July 1992)